# FASCICULE DE BREVET EUROPEEN

(11) **EP 0 611 215 B1**
(45) Date de publication et mention de la délivrance du brevet: **13.09.2000**
(21) Numéro de dépôt: 94400291.4
(22) Date de dépôt: 10.02.1994
(51) Int. Cl.: H02J 7/14, H02J 7/24

(54) **Circuit régulateur à excitation progressive pour la charge d'une batterie par un alternateur**
Regelschaltung mit progressivem Erreger zur Batterieladung durch einen Wechselstromgenerator
Regulator circuit with progressive excitation for battery charge from an alternator

(30) Priorité: 12.02.1993 FR 9301592
(43) Date de publication de la demande: 17.08.1994
(73) Titulaire: VALEO EQUIPEMENTS ELECTRIQUES MOTEUR, 94000 Créteil (FR)
(72) Inventeur: Vogelsberger, Marcel, F-91320 Wissous (FR)
(74) Mandataire: Martin, Jean-Jacques

(56) Documents cités:
- EP-A- 0 214 781
- EP-A- 0 421 332
- DE-A- 4 113 732
- US-A- 4 634 954

## Description

La présente invention a trait d'une façon générale à un circuit régulateur de la tension de charge d'une batterie par un alternateur dans un véhicule automobile ou analogue.

Classiquement, un tel circuit comprend un moyen pour comparer une première information variable, dérivée de la tension à la sortie de l'alternateur, avec un signal de référence et pour engendrer un premier signal de commande, dont une caractéristique électrique varie en fonction du résultat de la comparaison pour faire varier l'excitation de l'alternateur.

Cela étant, lorsque le moteur du véhicule tourne au ralenti et qu'un courant important est demandé à l'alternateur, notamment lors de la mise en service d'équipements électriques tels que dispositifs de dégivrage ou de chauffage par effet Joule, de climatiseurs, de projecteurs, etc..., il s'ensuit une baisse brutale de la tension à la sortie de l'alternateur, ce qui induit immédiatement l'application à celui-ci d'un courant d'excitation maximal. Le couple résistant présenté par l'alternateur au moteur augmente donc brutalement, et il peut en résulter un hoquetage, voire un calage du moteur.

On sait déjà pallier cet inconvénient en prévoyant que, lorsque la charge électrique de l'alternateur augmente brutalement, son excitation augmente seulement progressivement, en particulier pour laisser à un circuit de gestion électronique du moteur le temps de réagir à cette situation. Cependant, ce genre de circuit connu peut s'avérer relativement complexe et coûteux à réaliser.

En outre, les circuits connus sont généralement actifs au-dessous d'une certaine vitesse de rotation limite du moteur, et inactifs au-dessus de ce seuil, et il en résulte souvent un comportement du circuit régulateur mal adapté au régime de fonctionnement réel du moteur. En particulier, une excitation progressive de l'alternateur peut avoir lieu même quant elle n'est pas nécessaire, et aboutit à une période de temps nettement perceptible pour le conducteur pendant laquelle la tension du circuit électrique du véhicule est excessivement faible.

On connaît par le document EP-A-0 421 332 un circuit qui permet en partie de pallier ces inconvénients, et qui est défini dans le préambule de la revendication 1.

Un tel circuit connu est faiblement consommateur d'énergie électrique, et adapte son fonctionnement de façon relativement étroite au régime réel de fonctionnement du moteur.

La présente invention vise à proposer un tel circuit régulateur, qui soit moins complexe et moins coûteux que le circuit régulateur connu.

Elle propose à cet effet un circuit régulateur tel que défini dans la revendication 1.

Des aspects préférés, mais non limitatifs, de ce circuit sont définis dans les revendications dépendantes.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est un schéma d'un circuit électronique de gestion de charge progressive selon l'invention, et
les figures 2 et 3 sont deux chronogrammes illustrant le comportement du circuit de la figure 1 dans deux situations différentes.

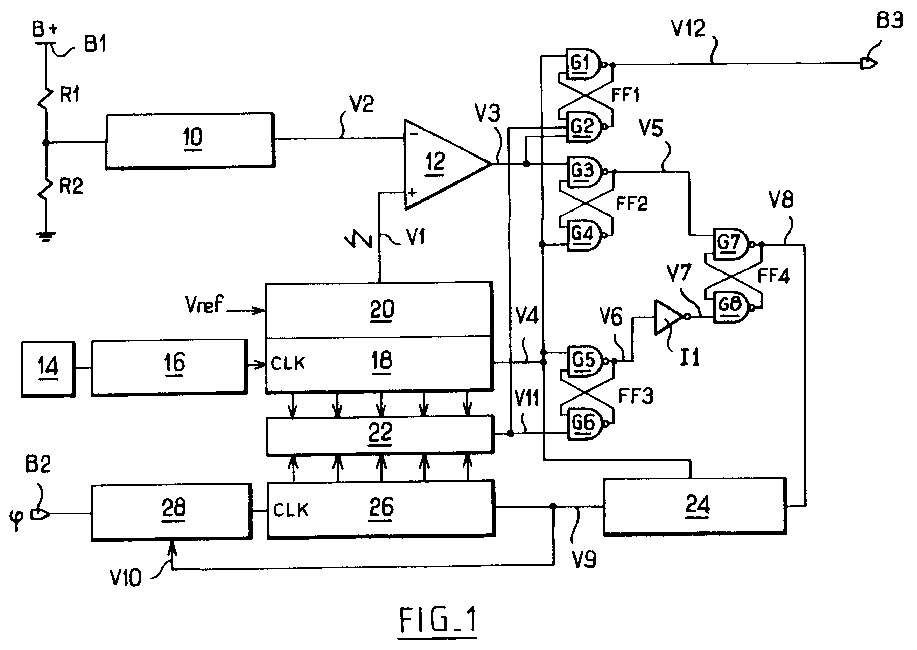

En référence tout d'abord à la figure 1, on a représenté un circuit comprenant une borne d'entrée B1 pour la tension B+ à la borne positive de la batterie du véhicule, une borne B2 pour un signal de phase ϕ délivré par l'alternateur du véhicule, et une borne de sortie B3 pour la commande d'un interrupteur à semi-conducteur (non représenté) destiné à contrôler le courant d'excitation dans l'enroulement d'excitation de l'alternateur.

La tension B+ est appliquée à un pont diviseur résistif R1, R2, une fraction de B+ prise au point milieu de ce pont étant appliquée à l'entrée d'un filtre passe-bas 10 pour la débarrasser de ses composantes alternatives et impulsionnelles telles que parasites à haute fréquence.

La sortie du filtre 10 (tension V2) est appliquée à l'entrée négative d'un comparateur analogique 12.

Un circuit oscillateur ou horloge 14, à fréquence fixe, attaque par l'intermédiaire d'un pré-diviseur 16 l'entrée de cadencement CLK d'un compteur numérique descendant 18, par exemple d'un compteur sur cinq bits.

Les cinq sorties parallèles du compteur 18 sont appliquées aux cinq entrées parallèles d'un convertisseur numérique/analogique 20, qui reçoit de façon classique une tension de référence Vref, générée de préférence par le circuit lui-même. Ainsi le circuit 20 produit en sortie, en correspondance avec les décomptages successifs du circuit 18, des rampes descendantes successives (tension V1), qui sont appliquées à l'entrée positive du comparateur 12. Le circuit décompteur 18 engendre également un signal d'horloge (tension V4), dont la fréquence est identique à celle des rampes descendantes et que l'on décrira en détail plus loin.

Les cinq sorties parallèles du compteur 18 attaquent également une première série d'entrées d'un comparateur numérique sur cinq bits 22.

Le circuit de l'invention comprend en outre quatre bascules bistables FF1, FF2, FF3 et FF4, constituées chacune, de façon entièrement conventionnelle, par le branchement particulier d'une paire de portes NON-ET, désignées par les références G1 à G8.

La bascule FF1 reçoit sur sa porte G1 le signal d'horloge V4 produit par le compteur 18. Elle reçoit sur sa porte G2, qui possède trois entrées, deux signaux d'entrée constitués respectivement par la tension V3 à la sortie du comparateur 12 et par la tension V11 à la sortie du comparateur numérique 22.

La sortie de FF1 (tension V12 prise sur la porte G1), qui constitue le signal de commande d'excitation, est reliée à la borne de sortie B3.

La deuxième bascule FF2 reçoit sur sa porte G3 le signal de sortie V3 du comparateur analogique 12, et sur sa porte G4 le signal d'horloge V4 précité.

La sortie de FF2 (tension V5 prise sur la porte G3) attaque l'entrée de la bascule FF4 située sur sa porte G7. L'entrée de la bascule FF3 située sur sa porte G5 reçoit le signal d'horloge V4, tandis que son entrée côté porte G6 reçoit la sortie V11 du comparateur numérique 22. La sortie de la bascule FF3 (tension V6 prise sur la porte G5) attaque l'entrée d'un inverseur logique I1 dont la sortie (tension V7) est reliée à la deuxième entrée de la bascule FF4, sur sa porte G8.

La sortie de FF4 (tension V8 prise sur la porte G7) est reliée à l'entrée d'un circuit intégrateur de bruit 24, constitué par exemple par un registre à décalage à N cellules (par exemple 8 cellules), dont les cellules sont reliées à un circuit combinatoire (non décrit en détail) dont le comportement sera décrit plus loin. La sortie du circuit 24 est une sortie à trois états, désignée par V9.

Cette tension V9 est appliquée à l'entrée de sens de comptage UP/DOWN d'un autre compteur numérique 26, de type bidirectionnel, dont les cinq sorties parallèles sont appliquées à cinq autres entrées du comparateur numérique 22 mentionné plus haut.

Le compteur/décompteur 26 est cadencé sur son entrée CLK par le signal ϕ, convenablement mis en forme par des moyens appropriés (non représentés), par l'intermédiaire d'un prédiviseur 28. La tension de sortie V9 du circuit intégrateur de bruit 24 agit également sur le prédiviseur 28 (tension désignée par V10 sur les figures), pour sélectivement autoriser ou interdire son action, et faire varier le taux de division comme on le verra plus loin.

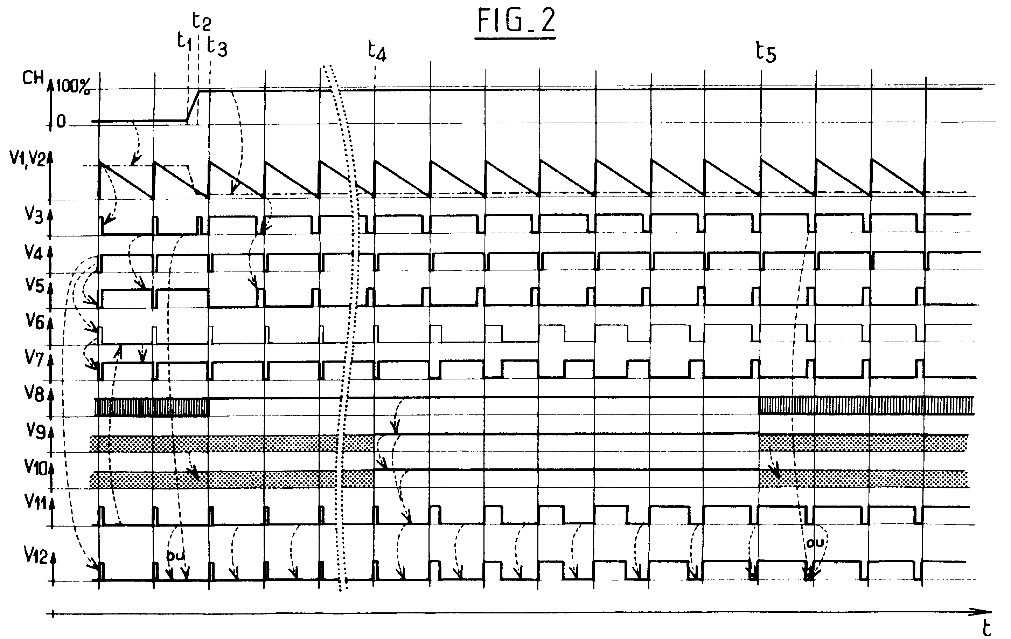

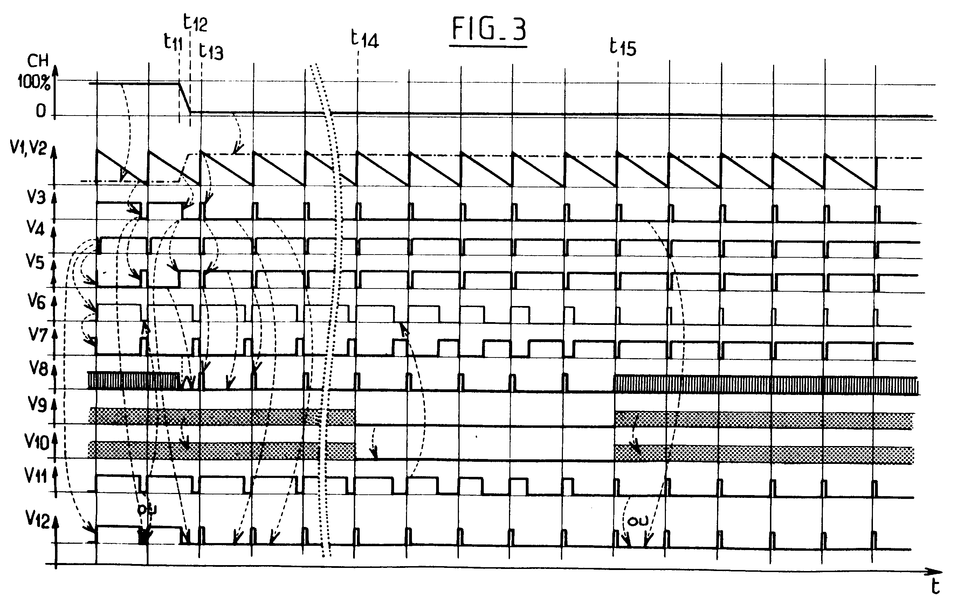

On va maintenant décrire, en référence à la figure 2 puis à la figure 3, le fonctionnement du circuit de la figure 1.

On va indiquer préliminairement que la régulation effectuée selon la présente invention est du type à fréquence fixe, c'est-à-dire que la variation de l'excitation de l'alternateur est effectuée en modifiant le seul rapport cyclique d'un signal rectangulaire dont la fréquence est invariable.

On suppose tout d'abord que l'alternateur auquel est associé le circuit de la présente invention fonctionne sous un régime stable de faible charge, le signal CH représentatif de cette charge et exprimé en pourcents étant illustré sur la figure 2.

Dans cette situation, la fraction de la tension B+ après filtrage (tension V2, illustrée en traits mixtes), est à un niveau élevé. La comparaison entre cette valeur de tension et les rampes descendantes (tension V1 en traits pleins) issues du convertisseur 20 engendre la tension V3, signal rectangulaire dont le rapport cyclique, noté RC1%, est faible.

On notera ici que le compteur descendant 18 délivre quant à lui le signal d'horloge V4 sous forme de courtes impulsions de niveau logique "0" au début de chaque rampe du signal V1, et donc à la fréquence à laquelle s'effectue la régulation.

Dans la situation de faible charge exprimée ci-dessus, la tension de sortie V12 du circuit doit présenter les mêmes niveaux logiques, aux mêmes instants, que la tension V3. A cet effet, la bascule FF1 est amenée au niveau haut ou "1" par chaque front descendant de la tension d'horloge V4, et est ramenée au niveau bas ou "0" par chaque front descendant de la tension V3. La bascule FF1 délivre donc le signal V12 illustré, identique au signal V3, et l'excitation de l'alternateur est donc commandée avec le rapport cyclique même du signal V3, pour réaliser la régulation, classique en soi, de la tension de sortie dudit alternateur. On notera ici que l'emploi de la bascule FF1 entre la sortie du comparateur 12 et la sortie principale du circuit de la figure 1 permet d'assurer une bonne immunité aux bruits et parasites propres à l'environnement d'un alternateur.

On va supposer ici que le contenu du compteur bidirectionnel 26 est tel que la comparaison faite en 22 entre ce contenu et le contenu du compteur descendant 18 délivre un signal V11 dont le rapport cyclique est très voisin du rapport cyclique RC1% du signal V3. Dans ces conditions, les fronts descendants des signaux V3 et V11 se produisent sensiblement aux mêmes instants, et le comportement de la bascule FF1, qui reçoit ces deux signaux, est bien comme décrit plus haut.

La bascule FF2 a pour objet de produire à sa sortie une tension V5 qui est représentative du rapport cyclique "demandé" par la régulation. Dans la situation stable de faible charge sus-mentionnée, la bascule FF2, à l'inverse de la bascule FF1, est amenée au niveau "0" par les fronts descendants du signal d'horloge V4. Elle est amenée au niveau "1" par les fronts descendants du signal V3 en sortie du comparateur 12. Ainsi la bascule FF2 délivre un signal V5 inverse du signal V3, avec conservation du rapport cyclique, en assurant là encore une immunité aux bruits.

La bascule FF3 ne réagit quant à elle qu'au signal d'horloge V4 et au signal de sortie V11 du comparateur numérique 22 : les fronts descendants de V4 amènent la sortie V6 de la bascule FF3 au niveau "1", tandis que les fronts descendants de la tension V11 ramènent cette tension V6 au niveau "0". Ainsi la bascule FF3 délivre un signal V6 qui reproduit, dans cette situation stable, le signal V11, avec le même rapport cyclique, lié au contenu du compteur 26. Ce signal V6 est inversé par l'inverseur I1 pour donner le signal V7.

On observe ici que, pour les raisons précités, les fronts descendants de V5 et de V7 se superposent (aux délais de propagation près, négligeables), tandis que leurs fronts montants se superposent approximativement.

L'objet de la bascule FF4 est de comparer les durées des périodes de niveau bas (donc les rapports cycliques) des tensions V5 et V7, et de délivrer un signal (tension V8) dont le niveau est "0" ou "1", en fonction de cette comparaison. Aussi longtemps que le régime stable précité se poursuit, la bascule FF4 délivre alternativement des niveaux "0" et "1", qui sont chargés en succession dans le registre à décalage du circuit 24.

Et aussi longtemps que ce registre à décalage contient à la fois des "0" et des "1", sa sortie est à l'état inactif (par exemple un état de haute impédance), et le contenu du compteur 26 ne varie pas.

On comprend donc que, dans ces conditions, la régulation s'effectue normalement. On observera ici que, le contenu du compteur 26 étant gelé pendant cette situation de fonctionnement "normal", on évite de faire travailler inutilement le circuit à une mise à jour fine permanente du contenu dudit compteur.

On a illustré sur la figure 2 une brusque augmentation de la charge électrique de l'alternateur, entre les instants t1 et t2, liée à la mise en service d'un ou plusieurs équipements électriques du véhicule qui consomment un fort courant.

La tension V2 obtenue à partir de B+ baisse donc rapidement, aux mêmes instants. A partir du cycle immédiatement suivant (instant t3), le rapport cyclique de V3 passe à une valeur élevée notée RC2%, tandis que le rapport cyclique de V11 reste pour le moment inchangé. Les fronts descendants de V11 se produisent maintenant bien avant les descendants de V3. La bascule FF1, dont la porte G2 reçoit à la fois les signaux V3 et V11, joue le rôle d'un sélecteur du signal dont le rapport cyclique est le plus faible, et c'est donc le signal V11 qui est reproduit sur sa sortie (tension V12). Cette sortie V12 est donc maintenue à un rapport cyclique faible, voisin de RC1%, déterminé par le contenu du compteur 26. Pour le moment, l'excitation de l'alternateur n'augmente donc pas.

En revanche, cette situation va induire au niveau des entrées de la bascule FF4 le phénomène suivant lequel les fronts montants de V5 vont apparaître tout à fait en fin de cycle, bien après les fronts montants de V7 qui restent pour le moment inchangés. Il en résulte que la tension V8 reste en permanence au niveau logique "1", et le registre à décalage se remplit progressivement de "1". A la fin d'un nombre de cycles N égal au nombre de cellules du registre à décalage, celui-ci est entièrement rempli de "1" (instant t4). La logique du circuit 24 est conçue (par une fonction ET classique) pour amener à cet instant sa sortie V9 au niveau logique "1", pour provoquer, à une cadence déterminée par la sortie du pré-diviseur 28, une décrémentation du contenu du compteur 26.

Il résulte de cet abaissement progressif du contenu du compteur 26 une augmentation progressive du rapport cyclique du signal V11, comme illustré.

Etant donné que ce sont alors les fronts descendants du signal V11, antérieurs à ceux du signal V3, qui agissent sur la bascule FF1 pour ramener son niveau de sortie à "0", le signal de sortie V12 du circuit adopte le même rapport cyclique, progressivement croissant, que le signal V11. On réalise donc une augmentation progressive de l'excitation de l'alternateur. On observera ici que la vitesse de progression de l'excitation dépend de la vitesse de décroissance du contenu du compteur 26, qui est elle-même proportionnelle à la vitesse de rotation de l'alternateur. En effet, l'entrée d'horloge du compteur 26 reçoit un signal dont la fréquence est proportionnelle à la vitesse de rotation de l'alternateur (pulsation du signal de phase appliqué sur l'entrée B2). Le taux de la division effectuée par le pré-diviseur 28 est fixé à une valeur appropriée lorsque celui-ci reçoit du circuit 24 le niveau logique "1" correspondant à une décroissance.

Cette caractéristique de la présente invention est avantageuse en ce que la charge progressive de l'alternateur est d'autant plus rapide que la vitesse de rotation courante de l'alternateur, et donc du moteur à combustion associé, est élevée : concrètement, cela signifie que l'on peut faire progresser la charge de l'alternateur d'autant plus vite que les risques de calage ou de hoquetage du moteur deviennent faibles.

Lorsque le contenu du compteur 26 a diminué jusqu'à une valeur telle que les rapports cycliques des tensions V3 et V11 sont à nouveau voisins (instant t5), la bascule FF4 se retrouve, sur le plan de l'organisation temporelle des fronts montants, dans la situation décrite précédemment pour le régime stable de faible charge : elle délivre alternativement en sortie des niveaux "0" et "1", qui se chargent dans le registre à décalage du circuit 24. La logique de ce circuit délivre alors en sortie un état inactif, qui fait cesser la décrémentation du compteur 26 et fige donc son contenu. Le rapport cyclique du signal V11 reste donc constant et voisin de celui du signal V3. la sortie V12 du circuit présente à partir de cet instant un rapport cyclique sensiblement égal au rapport cyclique demandé, défini par les signaux V3 et V5.

On comprend à partir de la description qui précède qu'il existe un certain temps d'attente entre moment où un rapport cyclique élevé est demandé (instant t2) et le moment où le rapport cyclique de la commande d'excitation (tension V12) commence effectivement à croître. Ce temps d'attente (jusqu'à ce que toutes les cellules du registre à décalage contiennent la même valeur logique) est avantageux en ce que de brusques accroissements de la charge seulement pendant une très courte durée, de l'ordre de quelques cycles, ne seront pas pris en compte.

La figure 3 illustre, de la même manière que la figure 2, le passage d'un niveau de charge élevé, stable, à un niveau de charge faible.

Lors d'une diminution brutale de la charge électrique branchée sur l'alternateur (figure 3), le circuit de la figure 1 se comporte pour un certain nombre d'aspects de la façon inverse de celle qui a été décrite en référence à la figure 2. Avant la brusque baisse de la charge (commençant à l'instant t11), le contenu du compteur 26 est stable à une valeur telle que les rapports cycliques des signaux V3 et V11 sont voisins. La bascule FF4 délivre un mélange de signaux logiques "0" et "1", et la sortie du circuit 24 est dans son inactif état.

Lorsque, entre t11 et t12, la charge baisse brusquement, le rapport cyclique du signal V3 devient dès le début du cycle de régulation suivant (instant t13) bien inférieur à celui du signal V11. Etant donné que le rôle de la bascule FF1 est de sélectionner celui des deux signaux V3 et V11 reçus qui présente le rapport cyclique le plus faible, c'est donc le signal V3 qui va être reproduit dans le signal de sortie V12, et l'excitation de l'alternateur va être immédiatement abaissée.

On observe ici que, dans le cas d'une baisse de charge électrique (provoquée par la coupure d'un appareil gros consommateur de courant), l'excitation de l'alternateur peut sans préjudice être immédiatement abaissée, car le seul effet induit au niveau du moteur est une simple augmentation momentanée de son régime, non préjudiciable.

Dans le même temps, la bascule FF4 délivre une tension V8 qui, à chaque chargement du registre à décalage, est au niveau "0".

Dès que le registre à décalage s'est entièrement chargé de "0", la logique du circuit 24 réagit à cette situation en délivrant en sortie une tension V9 de niveau logique "0" (instant t14). Ce niveau logique provoque l'incrémentation du contenu du compteur 26, à une cadence fixée par la pulsation du signal de phase de l'alternateur et le taux de division dans le pré-diviseur 28. On observera ici que ce taux de division est de préférence plus faible que celui provoqué par un niveau logique "1" de V9 dans l'hypothèse de fonctionnement de la figure 2. On assure ainsi une croissance du contenu du compteur 26 aussi rapide que possible, dans la mesure où il n'y a là aucune influence dudit contenu sur le rapport cyclique du signal de sortie V12.

L'intérêt d'une telle croissance rapide du contenu du compteur 26 est de ramener aussi vite que possible le circuit dans l'état initial correspondant au début du chronogramme de la figure 2; en d'autres termes, on prépare aussi vite que possible le circuit à faire face à une nouvelle brusque augmentation de la consommation en courant.

A l'issue de cette croissance rapide (instant t15), on se retrouve dans l'état initial. On notera ici que les intervalles de temps t4-t5 de la figure 2 et t14-t15 de la figure 3 ont été représentés comme étant semblables dans un seul souci de clarté; dans la pratique, le passage de l'état de l'instant t14 à celui de l'instant t15 demande, en vertu des explications qui précèdent, un nombre de cycles bien inférieur à celui nécessaire au passage de l'état de l'instant t4 à celui de l'instant t5.

En variante, on peut prévoir que le passage du signal V9 au niveau "0" provoque une dérivation du pré-diviseur 28, le signal de phase convenablement mis en forme étant ainsi appliqué directement à l'entrée d'horloge du compteur 26.

On observera ici que le circuit de la figure 1 se comporte comme décrit quelle que soit l'amplitude des variations de la charge de l'alternateur. Simplement, lors d'une faible variation de charge, l'amplitude du changement à apporter au contenu du compteur 26 est moins importante, et la nouvelle valeur stable est atteinte rapidement. La constante de temps de la régulation reste tout à fait acceptable.

Bien entendu, la présente invention n'est nullement limitée à la forme de réalisation décrite ci-dessus et représentée sur les dessins, mais l'homme de l'art saura y apporter toute variante ou modification conforme à l'objet défini par les revendications.

## Revendications

1. Circuit régulateur de la tension de charge d'une batterie par un alternateur, notamment pour véhicule automobile, du type comprenant:
un générateur de signaux (18, 20) pour engendrer un signal de référence en dents de scie (V1),
en moyen (12) comparateur (12, FF2) pour comparer une tension (V2) proportionnelle à la tension (B+) à la sortie de l'alternateur, avec ledit signal de référence en dents de scie (V1) et pour engendrer un premier signal de commande (V3), dont le rapport cyclique varie en fonction du résultat de la comparaison pour faire varier l'excitation de l'alternateur,
un moyen de comptage (26) pour mémoriser une information numérique variable,
un second moyen comparateur (22), numérique, pour comparer ladite information numérique variable avec un signal numérique de comparaison et pour engendrer un second signal de commande (V11) dont le rapport cyclique varie en fonction du résultat de la comparaison pour faire varier l'excitation de l'alternateur,
un moyen de pilotage (FF2, FF3, FF4, 24) de l'information numérique variable, réagissant aux premier et second signaux de commande (V3, V11) pour faire varier ladite information numérique variable en correspondance avec les variations de la tension (V2) proportionnelle à la tension (B+) à la sortie de l'alternateur, mais à une allure réduite par rapport à l'allure des variations de ladite tension (V2), lors d'une augmentation rapide du courant demandé à l'alternateur et à la batterie, et
un moyen sélecteur (FF1) pour commander l'excitation de l'alternateur à l'aide dudit second signal de commande (V11) lors d'une telle augmentation rapide du courant demandé à l'alternateur et à la batterie, pour ainsi provoquer une augmentation progressive de l'excitation de l'alternateur
caractérise en ce que
ledit signal numérique de comparaison est le même signal de référence qui, après conversion numérique-analogique, sert de signal de référence en dents de scie (V1), et le moyen de pilotage (FF4, 24) comprend un circuit logique (FF2, FF3, FF4, I1) apte à comparer les rapports cycliques des premier et second signaux (V3, V11) et à délivrer un signal en fonction de cette comparaison pour progressivement varier ladite information numérique et pour provoquer ainsi ladite augmentation progressive dudit second signal de commande (V11)

2. Circuit selon la revendication 1, caractérisé en ce que ladite information numérique variable est apte à varier dans la même plage et dans le même sens que ladite tension (V2) proportionnelle à la tension (B+) à la sortie de l'alternateur.

3. Circuit selon l'une des revendications 1 et 2, caractérisé en ce que le moyen de pilotage (FF4, 24) est apte à faire varier l'information numérique variable seulement après l'écoulement d'un certain délai à la suite de l'augmentation du courant demandé à l'alternateur.

4. Circuit selon la revendication 3, caractérisé en ce que le moyen de pilotage (FF4, 24) comprend en outre un circuit intégrateur (24) propre à faire varier le contenu du moyen de comptage (26) seulement lorsque, pendant un nombre de cycles de régulation donné, ledit circuit logique(FF4) a délivré le même signal.

5. Circuit selon la revendication 4, caractérisé en ce que ledit circuit logique (FF4) comprend une bascule bistable et en ce que le circuit intégrateur (24) comprend un registre à décalage associé à une logique combinatoire.

6. Circuit selon l'une des revendications 1 à 5, caractérisé en ce que l'allure de variation de l'information numérique variable est déterminée en fonction de la vitesse de rotation de l'alternateur.

7. Circuit selon la revendication 6, caractérisé en ce que l'allure de variation de l' information numérique variable dans un sens correspondant à une diminution de la tension de sortie de l'alternateur est plus lente que l'allure de variation de ladite information numérique dans le sens opposé.

8. Circuit selon la revendication 6 ou 7, caractérisé en ce qu'une entrée d'horloge du second moyen de comptage (26) reçoit un signal de cadencement dérivé d'un signal de phase (ϕ) de l'alternateur.

9. Circuit selon les revendications 7 et 8 prises en combinaison, caractérisé en ce qu'il est prévu un circuit de division numérique (28) possédant une entrée de commande pour faire varier le taux de division en fonction du signal de sortie du moyen de pilotage (FF4, 24).

10. Circuit selon la revendication 9, caractérisé en ce que le taux de division est un taux unitaire dans le cas d'une variation de l'information numérique variable dans ledit sens opposé.

11. Circuit selon l'une des revendications 1 à 10, caractérisé en ce que le moyen sélecteur (FF1) fournit en sortie celui des premier et second signaux de commande (V3, V11) dont le rapport cyclique est le plus faible.

12. Circuit selon la revendication 11, caractérisé en ce que ledit moyen sélecteur comprend une bascule bistable (FF1) dont deux entrées de réarmement reçoivent les signaux de sortie des deux moyens comparateurs (12, 22).

## Claims

1. A circuit for regulating the voltage at which an alternator charges a battery, in particular for a motor vehicle, the circuit being of the type comprising:
a signal generator (18, 20) for generating a sawtooth reference signal (V1);
comparator means (12, FF2) for comparing said sawtooth reference signal (V1) with a voltage (V2) proportional to the output voltage (B+) of the alternator, and for generating a first control signal (V3) having a duty ratio that varies as a function of the result of the comparison to cause excitation of the alternator to vary;
counting means (26) for storing variable digital data;
digital second comparator means (22) for comparing a digital comparison signal with said variable digital data, and for generating a second control signal (V11) having a duty ratio that varies as a function of the result of the comparison to vary the excitation of the alternator;
variable digital data control means (FF2, FF3, FF4, 24) acting on the first and second control signals (V3, V11) to cause said variable digital data to vary in correspondence with variations in the voltage (V2) proportional to the output voltage (B+) of the alternator, but at a rate that is slower than the rate at which said variations take place in the voltage (V2) in the event of a sudden increase in current being demanded from the alternator and the battery; and
selector means (FF1) for controlling excitation of the alternator with the help of said second control signal (V11) in the event of such a sudden increase in the current demanded from the alternator and the battery, thereby causing excitation of the alternator to increase progressively;
the circuit being characterized in that:
said digital comparison signal is the same reference signal which, after digital-to-analog conversion, serves as the sawtooth reference signal (V1), and the control means (FF4, 24) comprise a logic circuit (FF2, FF3, FF4, I1) suitable for comparing the duty ratios of the first and second signals (V3, V11), and for delivering a signal as a function of said comparison, thereby causing said second control signal (V11) to increase progressively.

2. A circuit according to claim 1, characterized in that said variable digital data is suitable for varying over the same range and in the same direction as said voltage (V2) proportional to the output voltage (B+) of the alternator.

3. A circuit according to claim 1 or 2, characterized in that the control means (FF4, 24) are capable of causing the variable digital data to vary only after a certain time period has elapsed after an increase in the current demand on the alternator.

4. A circuit according to claim 3, characterized in that the control means (FF4, 24) further comprise an integrator circuit (24) suitable for causing the contents of the counting means (26) to vary only after said logic circuit (FF4) has given the same signal for a given number of regulation cycles.

5. A circuit according to claim 4, characterized in that said logic circuit (FF4) comprises a bistable flip-flop and in that the integrator circuit (24) comprises a shift register associated with a combinational logic circuit.

6. A circuit according to any one of claims 1 to 5, characterized in that the rate at which the variable digital data varies is determined as a function of the rotation speed of the alternator.

7. A circuit according to claim 6, characterized in that the rate at which the variable digital data varies in a direction corresponding to a reduction in the output voltage from the alternator is slower than the rate at which said digital data varies in the opposite direction.

8. A circuit according to claim 6 or 7, characterized in that a clock input of a second counting means (26) receives a clock signal derived from a phase signal (φ) of the alternator.

9. A circuit according to claims 7 and 8 taken in combination, characterized in that a digital divider circuit (28) is provided having a control input for varying its division ratio as a function of the output signal from the control means (FF4, 24).

10. A circuit according to claim 9, characterized in that the division ratio is unity when said variable digital data is varying in said opposite direction.

11. A circuit according to any one of claims 1 to 10, characterized in that the selector means (FF1) provides an output signal constituted by that one of the first and second control signals (V3, V11) that has the smaller duty ratio.

12. A circuit according to claim 11, characterized in that said selector means comprises a bistable flip-flop (FF1) whose two reset inputs receive the output signals from the two comparator means (12, 22).

## Patentansprüche

1. Schaltung zur Regelung der Ladespannung zum Laden einer Batterie durch einen Wechselstromgenerator, insbesondere für Kraftfahrzeuge, umfassend:
- einen Signalgeber (18, 20), um ein sägezahnförmiges Referenzsignal (V1) zu erzeugen,
- ein als Vergleicher (12, FF2) dienendes Mittel (12), um eine Spannung (V2) proportional zur Spannung (B+) am Ausgang des Wechselstromgenerators mit dem besagten sägezahnförmigen Referenzsignal (V1) zu vergleichen und um ein erstes Steuersignal (V3) zu erzeugen, dessen Tastverhältnis in Abhängigkeit vom Ergebnis des Vergleichs veränderlich ist, um die Erregung des Wechselstromgenerators zu verändern,
- ein Zählmittel (26) um eine veränderliche digitale Information zu speichern,
- ein zweites digitales Vergleichsmittel (22), um die besagte veränderliche digitale Information mit einem digitalen Vergleichssignal zu vergleichen und um ein zweites Steuersignal (V11) zu erzeugen, dessen Tastverhältnis in Abhängigkeit vom Ergebnis des Vergleichs veränderlich ist, um die Erregung des Wechselstromgenerators zu verändern,
- ein Steuerungsmittel (FF2, FF3, FF4, 24) zur Steuerung der veränderlichen digitalen Information, um die besagte veränderliche digitale Information in Entsprechung mit den Änderungen der Spannung (V2) proportional zur Spannung (B+) am Ausgang des Wechselstromgenerators zu verändern, aber in einer geringeren Geschwindigkeit im Verhältnis zur Geschwindigkeit der Änderungen der besagten Spannung (V2) bei einer schnellen Erhöhung des vom Wechselstromgenerator und von der Batterie angeforderten Stroms, und
- ein Auswahlmittel (FF1) zur Steuerung der Erregung des Wechselstromgenerators anhand des besagten zweiten Steuersignals (V11) bei einer solchen schnellen Erhöhung des vom Wechselstromgenerator und von der Batterie angeforderten Stroms, um dadurch eine fortschreitende Erhöhung der Erregung des Wechselstromgenerators zu bewirken,
**dadurch gekennzeichnet,** daß
das besagte digitale Vergleichssignal das gleiche Referenzsignal ist, das nach Digital-Analog-Umsetzung als sägezahnförmiges Referenzsignal (V1) dient, und das Steuerungsmittel (FF4, 24) eine logische Schaltung (FF2, FF3, FF3, I1) umfaßt, die in der Lage ist, die Tastverhältnisse des ersten und zweiten Signals (V3, V11) zu vergleichen und ein Signal in Abhängigkeit von diesem Vergleich zu liefern, um die besagte digitale Information fortschreitend zu verändern und dadurch die besagte fortschreitende Erhöhung des besagten zweiten Steuersignals (V11) zu bewirken.

2. Schaltung nach Anspruch 1, **dadurch gekennzeichnet,** daß sich die besagte veränderliche digitale Information im gleichen Bereich und in der gleichen Richtung wie die besagte Spannung (V2) proportional zur Spannung (B+) am Ausgang des Wechselstromgenerators verändern kann.

3. Schaltung nach einem der Ansprüche 1 und 2, **dadurch gekennzeichnet,** daß das Steuerungsmittel (FF4, 24) die veränderliche digitale Information erst nach Ablauf einer bestimmten Zeit im Anschluß an die vom Wechselstromgenerator angeforderte Erhöhung des Stroms verändern kann.

4. Schaltung nach Anspruch 3, **dadurch gekennzeichnet,** daß das Steuerungsmittel (FF4, 24) außerdem eine Integratorschaltung (24) umfaßt, um den Inhalt des Zählmittels (26) nur zu verändern, wenn während einer gegebenen Anzahl von Regelungszyklen die besagte logische Schaltung (FF4) das gleiche Signal geliefert hat.

5. Schaltung nach Anspruch 4, **dadurch gekennzeichnet,** daß die besagte logische Schaltung (FF4) eine bistabile Kippschaltung umfaßt und daß die Integratorschaltung (24) ein mit einer kombinatorischen Logik verbundenes Schieberegister umfaßt.

6. Schaltung nach einem der Ansprüche 1 bis 5, **dadurch gekennzeichnet,** daß die Geschwindigkeit der Änderung der veränderlichen digitalen Information in Abhängigkeit von der Drehgeschwindigkeit des Wechselstromgenerators bestimmt wird.

7. Schaltung nach Anspruch 6, **dadurch gekennzeichnet,** daß die Geschwindigkeit der Änderung der veränderlichen digitalen Information in einer Richtung entsprechend einer Verringerung der Ausgangsspannung des Wechselstromgenerators langsamer als die Geschwindigkeit der Änderung der besagten digitalen Information in der entgegengesetzten Richtung ist.

8. Schaltung nach Anspruch 6 oder 7, **dadurch gekennzeichnet,** daß ein Takteingang des zweiten Zählmittels (26) ein von einem Phasensignal (ϕ) des Wechselstromgenerators abgeleitetes Taktsignal erhält.

9. Schaltung nach den Ansprüchen 7 und 8 in Kombination, **dadurch gekennzeichnet,** daß eine digitale Teilerschaltung (28) vorgesehen ist, die einen Steuereingang umfaßt, um das Teilungsverhältnis in Abhängigkeit vom Ausgangssignal des Steuerungsmittels (FF4, 24) zu verändern.

10. Schaltung nach Anspruch 9, **dadurch gekennzeichnet,** daß das Teilungsverhältnis im Falle einer Veränderung der veränderlichen digitalen Information in der besagten entgegengesetzten Richtung ein unitäres Verhältnis ist.

11. Schaltung nach einem der Ansprüche 1 bis 10, **dadurch gekennzeichnet,** daß das Auswahlmittel (FF1) ausgangsseitig dasjenige der ersten und zweiten Steuersignale (V3, V11) liefert, dessen Tastverhältnis am niedrigsten ist.

12. Schaltung nach Anspruch 11, **dadurch gekennzeichnet,** daß das besagte Auswahlmittel eine bistabile Kippschaltung (FF1) umfaßt, deren zwei Rückstelleingänge die Ausgangssignale der beiden Vergleichsmittel (12, 22) erhalten.
